# EUROPEAN PATENT SPECIFICATION

(11) **EP 4 550 159 B1**
(45) Date of publication and mention of the grant of the patent: **24.06.2026**
(21) Application number: 24208602.3
(22) Date of filing: 24.10.2024
(51) Int. Cl.: G06F 13/38, G09G 5/00, G06F 3/14, H04N 21/436, H04L 12/28, G06F 13/42, G06F 13/40, H04N 21/4363

(54) **PROJECTION SYSTEM AND CONTROL METHOD**
PROJEKTIONSSYSTEM UND STEUERUNGSVERFAHREN
SYSTÈME DE PROJECTION ET PROCÉDÉ DE COMMANDE

(30) Priority: 03.11.2023 US 202363595759 P; 16.01.2024 CN 202410062975
(43) Date of publication of application: 07.05.2025
(73) Proprietor: Coretronic Corporation, Hsin-Chu 300 (TW)
(72) Inventor: Chen, Kun-Hong, 300 Hsin-Chu (TW); Liao, Yi-Jun, 300 Hsin-Chu (TW); Chen, Ssu-Ming, 300 Hsin-Chu (TW)
(74) Representative: Ter Meer Steinmeister & Partner

(56) References cited:
- EP-A2- 1 096 366
- AU-A4- 2012 101 658
- US-A1- 2019 087 375

## Description

### BACKGROUND

### Technical Field

The disclosure relates to a system and a method, and in particular relates to a projection system and a control method.

### Description of Related Art

In the commonly used Internet TV environment today, it generally only has basic playback operation functions and does not have the ability to adjust system settings for externally connected display monitors or projectors. On the other hand, when developing applications with system setting functions in these Internet TV environments, it may require overcoming stringent system security permissions, or bearing the high cost of application maintenance. Therefore, in the current Internet TV environment, the development of an application that integrates the system settings of a display or proj ector requires substantial resources in terms of manpower and financial investment.

EP 1 096 366 A2 describes an image controlling system where a control device and a projector are interconnected via USB and RGB cables for bi-directional data transmission, enabling enhanced display performance through coordinated control and data exchange.

AU 2012 101 658 A4 describes a dual orientation connector with symmetrical contacts on opposing sides of a tab, allowing it to be inserted into a receptacle in either direction while maintaining electrical connectivity.

US 2019/087375 A1 describes a USB hub with upstream and downstream ports and dual USB device control units that enable role switching between a mobile device and a host by dynamically changing routing paths and packet roles within the hub.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The object of the present invention is solved by the features of the independent claims. Preferred embodiments are given in the dependent claims.

In one or more embodiments, the at least one first communication port may be a universal serial bus Type-C interface (USB Type-C) communication port or a serial advanced technology attachment (SATA) communication port.

In one or more embodiments, when the at least one first communication port is a USB Type-C communication port, the TTYS interface of the at least one first communication port may be located at differential signal docking pins in the USB Type-C communication port.

In one or more embodiments, the USB interface of the at least one first communication port may be located at USB 2.0 interface pins in the USB Type-C communication port.

In one or more embodiments, the at least one second communication port may comprise at least one of a universal asynchronous receiver/transmitter (UART) interface and a universal serial bus (USB) interface.

In one or more embodiments, when the control signal is output from the image control device through the TTYS interface of the at least one first communication port, the projector may receive the control signal through the UART interface of the at least one second communication port.

In one or more embodiments, when the control signal is output from the image control device through the USB interface of the at least one first communication port, the projector may receive the control signal through the USB interface of the at least one second communication port.

In one or more embodiments, the projection system may further comprise a relay module.

In one or more embodiments, the relay module may comprise at least one third communication port.

In one or more embodiments, the relay module may be communicatively connected to the at least one first communication port of the image control device through a UART interface of the at least one third communication port.

In one or more embodiments, the first processing module of the image control device may be configured to transmit the control signal to the relay module through the TTYS interface of the at least one first communication port and the UART interface of the at least one third communication port.

In one or more embodiments, the relay module may further comprise a microcontroller configured to translate the control signal.

In one or more embodiments, the control signal transmitted to the projector through the UART interface of the at least one second communication port after the control signal may be translated by the microcontroller.

In one or more embodiments, the relay module may further comprise a USB hub configured to connect at least one USB device

In one or more embodiments, the USB hub may be communicatively connected to the at least one first communication port of the image control device through a USB interface of the at least one third communication port.

In one or more embodiments, the image control device may output the control signal to the relay module through the USB interface of the at least one first communication port, and may transmit the control signal to the USB device through the USB hub, so that the at least one USB device executes an operation corresponding to the control signal.

In one or more embodiments, the projection system may further comprise a relay module.

In one or more embodiments, the relay module may comprise at least one third communication port and a USB bridge.

In one or more embodiments, the at least one second communication port may comprise a USB interface.

In one or more embodiments, the relay module may be communicatively connected to the at least one first communication port of the image control device through a USB interface of the at least one third communication port.

In one or more embodiments, the USB bridge may be configured to receive the control signal transmitted from the image control device through the USB interface of the at least one first communication port and the USB interface of the at least one third communication port, and to transmit the control signal to the USB interface of the at least one second communication port of the projector in a forwarding manner.

In one or more embodiments, the image control device may further comprise a first storage unit configured to store a first data.

In one or more embodiments, the projector may access the first data through the USB bridge.

In one or more embodiments, the projector may further comprise a second storage unit configured to store a second data.

In one or more embodiments, the image control device may access the second data through the USB bridge.

In one or more embodiments, the relay module may further comprise a microcontroller.

In one or more embodiments, the microcontroller may be connected between the USB bridge and the projector.

In one or more embodiments, the control signal may be sequentially forwarded to the projector through the USB interface of the at least one first communication port, the USB interface of the at least one third communication port, the USB bridge, the microcontroller, and the USB interface of the at least one second communication port.

In one or more embodiments, the at least one first communication port may be a universal serial bus type C interface (USB Type-C) communication port or a serial advanced technology attachment (SATA) communication port.

In one or more embodiments, when the at least one first communication port is a USB Type-C communication port, the TTYS interface of the at least one first communication port may be located at differential signal docking pins in the USB Type-C communication port, the USB interface of the at least one first communication port may be located at USB 2.0 interface pins in the USB Type-C communication port.

In one or more embodiments, the at least one second communication port may comprise at least one of a universal asynchronous receiver/transmitter (UART) interface and a universal serial bus (USB) interface.

In one or more embodiments, when the control signal is output from the image control device through the TTYS interface of the at least one first communication port, the projector may receive the control signal through the UART interface of the at least one second communication port.

In one or more embodiments, when the control signal is output from the image control device through the USB interface of the at least one first communication port, the projector may receive the control signal through the USB interface of the at least one second communication port.

In one or more embodiments, the projector system may comprise a relay module.

In one or more embodiments, the relay module may comprise at least one third communication port.

In one or more embodiments, the control signal may be transmitted to the relay module by the first processing module of the image control device through the TTYS interface of the at least one first communication port and a UART interface of the at least one third communication port.

In one or more embodiments, a microcontroller of the relay module may translate the control signal, and may transmit the control signal to the projector through the UART interface of the at least one second communication port.

In one or more embodiments, the relay module may further comprise a USB hub configured to connect at least one USB device.

In one or more embodiments, the control method may further comprise outputting the control signal through the USB interface of the at least one first communication port and transmitting the control signal to the at least one USB device in the relay module through a USB interface of the at least one third communication port and the USB hub, so that the at least one USB device executes an operation corresponding to the control signal.

In one or more embodiments, projection system may further comprise a relay module.

In one or more embodiments, the relay module may comprise at least one third communication port and a USB bridge.

In one or more embodiments, the at least one second communication port may comprise a USB interface.

In one or more embodiments, the control method may further comprise receiving the control signal transmitted from the image control device through the USB interface of the at least one first communication port and a USB interface of the at least one third communication port through the USB bridge of the relay module, and transmitting the control signal to the projector through the USB interface of the at least one second communication port in a forwarding manner.

In one or more embodiments, the projector may access a first data in a first storage unit of the image control device through the USB bridge.

In one or more embodiments, the image control device may access a second data in a second storage unit of the projector through the USB bridge.

In one or more embodiments, the relay module may further comprise a microcontroller.

In one or more embodiments, the control signal may be sequentially forwarded to the projector through the USB interface of the at least one first communication port, the USB interface of the at least one third communication port, the USB bridge, the microcontroller, and the USB interface of the at least one second communication port.

Other objectives, features and advantages of the present disclosure will be further understood from the further technological features disclosed by the embodiments of the present disclosure wherein there are shown and described preferred embodiments of this disclosure, simply by way of illustration of modes best suited to carry out the disclosure.

### BRIEF DESCRIPTION OF THE DRAWINGS

FIG. 1 is a block schematic diagram of a projection system of an embodiment of the disclosure.
FIG. 2 is a block schematic diagram of a projection system of another embodiment of the disclosure.
FIG. 3 is a block schematic diagram of a projection system of another embodiment of the disclosure.
FIG. 4 is a flowchart of a control method of an embodiment of the disclosure.
FIG. 5A is a flowchart of a control method of another embodiment of the disclosure.
FIG. 5B is a flowchart of a control method of another embodiment of the disclosure.
FIG. 6 is a block schematic diagram of a projection system of another embodiment of the disclosure.
FIG. 7 is a block schematic diagram of a projection system of another embodiment of the disclosure.
FIG. 8 is a flowchart of a control method of another embodiment of the disclosure.
FIG. 9 is a flowchart of a control method of another embodiment of the disclosure.

### DETAILED DESCRIPTION OF DISCLOSED EMBODIMENTS

It is to be understood that other embodiment may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter as well as additional items. Unless limited otherwise, the terms "connected," "coupled," and "mounted," and variations thereof herein are used broadly and encompass direct and indirect connections, couplings, and mountings.

The above and other technical contents, features and effects of the disclosure will be clear from the below detailed description of an embodiment of the disclosure with reference to accompanying drawings.

A projection system and a control method, which may provide the function of controlling a projector in an existing Internet TV environment, are provided in the disclosure.

The other objectives and advantages of the disclosure may be further understood from the descriptive features disclosed in the disclosure.

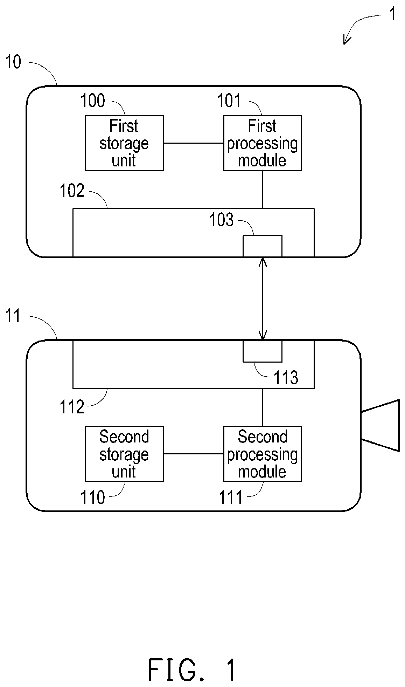

FIG. 1 is a block schematic diagram of a projection system 1 of an embodiment of the disclosure. The projection system 1 includes an image control device 10 and a projector 11. The image control device 10 includes a first processing module 101, an application (App), and at least one first communication port 102. The first processing module 101 includes at least one processor configured to execute the application and generate a control signal through the application. The first processing module 101 outputs the control signal through at least one first communication port 102.

Specifically, the first communication port 102 in the image control device 10 may include an interface 103, which may be at least one of a teletype serial (TTYS) interface and a universal serial bus (USB) interface. The interface 103 of the first communication port 102 is used to communicatively connect to the projector 11. In addition, the projector 11 includes a second processing module 111, at least a second communication port 112, and a second storage unit 110. The projector 11 is communicatively connected to the first communication port 102 of the image control device 10 through the second communication port 112. The second processing module 111 receives the control signal through the second communication port 112 and controls the projector 11 according to the control signal, so that the projector 11 performs a function corresponding to the control signal. The second communication port 112 in the projector 11 may include an interface 113, which may be at least one of a universal asynchronous receiver/transmitter (UART) interface and a universal serial bus (USB) interface. The interface 113 of the second communication port 112 is used to communicatively connect to the interface 103 of the first communication port 102 of the image control device 10. In this way, the image control device 10 and the projector 11 may transmit control signals through the mutually communicatively connected interfaces 103 and 113, thereby realizing the function of the image control device 10 controlling (e.g., system settings) the projector 11.

In this embodiment, the first communication port 102 of the image control device 10 has a TTYS interface 103, and the second communication port 112 of the projector 11 has a UART interface 113. The image control device 10 uses the TTYS interface 103 of the first communication port 102 and the UART interface 113 of the second communication port 112 to transmit the control signal from the image control device 10 to the projector 11 to control the projector 11 (e.g., the system settings of the projector). In other embodiments, the first communication port 102 of the image control device 10 has a USB interface, and the second communication port 112 of the projector 11 also has a USB interface. When the control signal is output from the image control device 10 through the USB interface of the first communication port 102, the projector 11 receives the control signal through the USB interface of the second communication port 112, but the disclosure is not limited thereto.

Specifically, the image control device 10 further includes a first storage unit 100. The first storage unit 100 stores applications, which are, for example, applications compatible with Google TV, Android TV, Apple TV, or other similar Internet TV environments. The first processing module 101 may execute an application by accessing the first storage unit 100 to control the projector 11 to play the corresponding projection image. In addition, the user may also execute the application by operating the image control device 10 to control the projector 11 (e.g., system settings). For example, when the user uses the projection system 1 to play a video and intends to adjust the brightness of the projected image from the projector 11, the user may initiate and execute the application accessed by the first processing module 101 by operating the image control device 10. The application provides a menu of a variety of system control, and the user may select the option to adjust the brightness of the projected image through the menu of the application. In this way, in response to the operation of the user, the first processing module 101 of the image control device 10 may generate a control signal and perform ASCII (American standard code for information interchange) encoding on the control signal, and output the encoding through the TTYS interface 103 in the first communication port 102 to the UART interface 113 in the second communication port 112 of the projector 11. The second processing module 111 of the projector 11 includes at least one processor, such as a system on chip (SoC). In this embodiment, ASCII decoding may be programmed in the second processing module 111. After the UART interface 113 of the second communication port 112 of the projector 11 receives the ASCII-encoded control signal, the second processing module 111 translates the control signal, and changes the brightness of the projected image of the projector 11 according to the translated control signal.

In this embodiment, the first communication port 102 is, for example, a USB Type-C communication port. Specifically, it may be a full-featured (DisplayPort Alt Mode) USB Type-C communication port. The TTYS interface 103 used to transmit control signals may be located at the differential signal docking pins (Tx, Rx) in the USB Type-C communication port. However, in other embodiments, if the USB interface is used as the interface 103 for transmitting control signals, the USB interface is located at the USB 2.0 interface pins in the USB Type-C communication port (i.e., the first communication port). In addition, the first communication port 102 may also be a serial advanced technology attachment (SATA) communication port, a bus communication port, or other communication ports that may be configured to transmit control signals.

In this embodiment, the first communication port 102 and the second communication port 112 may be communication ports with the same transmission standard. For example, the first communication port 102 and the second communication port 112 may both be USB Type-C communication ports, and the interfaces 103 and 113 may be located at differential signal docking pins in the USB Type-C communication port. The image control device 10 and the projector 11 may use the differential signal docking pins in the male to female connected USB Type-C communication port as the TTYS interface and the UART interface to realize the transmission of control signals. It should be noted that in this embodiment, the image control device 10 and the projector 11 are directly communicatively connected through the first communication port 102 and the second communication port 112 for signal transmission. However, in other embodiments, the image control device 10 and the projector 11 may also transmit signals through an indirect communication connection through the first communication port 102 and the second communication port 112, and the disclosure is not limited thereto.

In one embodiment, the first storage unit 100 and/or the second storage unit 110 may be, for example, any type of fixed or movable random access memory (RAM), read-only memory (ROM), flash memory, hard disk drive (HDD), solid state drive (SSD), or similar elements, or a combination thereof.

In one embodiment, the first processing module 101 and/or the second processing module 111 may be, for example, a central processing unit (CPU), or other programmable general-purpose or special-purpose micro control unit (MCU), microprocessor, digital signal processor (DSP), programmable controller, application specific integrated circuit (ASIC), graphics processing unit (GPU), arithmetic logic unit (ALU), complex programmable logic device (CPLD), field programmable gate array (FPGA), any other type of integrated circuit, state machine, processor based on advanced RISC machine (ARM), or other similar elements, or a combination of the elements thereof. Alternatively, the first processing module 101 and/or the second processing module 111 may be hardware circuits implemented through a hardware description language (HDL) or any other digital circuit design method that is well known to those skilled in the art.

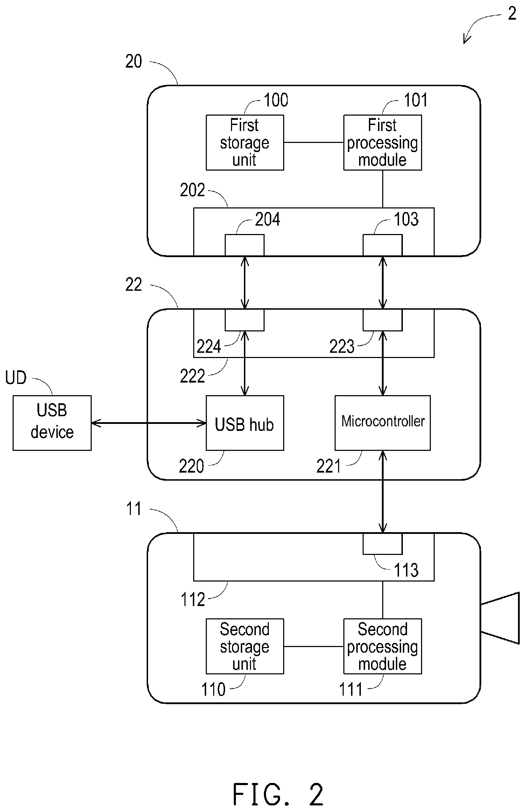

FIG. 2 is a block schematic diagram of a projection system 2 according to the invention. The projection system 2 includes an image control device 20, a projector 11, and a relay module 22. The projection system 2 of FIG. 2 is similar to the projection system 1 of FIG. 1, so the same elements use the same symbols and are not repeated herein. Specifically, the image control device 10 in FIG. 1 is replaced by the image control device 20 in FIG. 2, and a relay module 22 is also disposed between the image control device 20 and the projector 11, so that control signals may be transmitted between the image control device 20 and the projector 11 through the relay module 22.

In addition to the TTYS interface 103, the first communication port 202 in the image control device 20 also includes a USB interface 204. On the other hand, the relay module 22 includes a USB hub 220, a microcontroller 221, and a third communication port 222. The third communication port 222 includes a UART interface 223 and a USB interface 224, which are respectively communicatively connected to the TTYS interface 103 and USB interface 204 of the first communication port 202. Specifically, the third communication port 222 may be the aforementioned USB Type-C communication port. The first processing module 101 of the image control device 20 transmits the ASCII-encoded control signal from the TTYS interface 103 of the first communication port 202 to the UART interface 223 of the third communication port 222 of the relay module 22, and then provides it to the microcontroller 221 of the relay module 22. The microcontroller 221 may translate the control signal and then transmit it to the UART interface 113 of the second communication port 112 of the projector 11. At this time, the second processing module 111 of the projector 11 does not need to have the ASCII translation function, but directly causes the projector 11 to execute the corresponding function according to the control signal translated by the microcontroller 221 of the relay module 22.

On the other hand, the USB hub 220 of the relay module 22 is connected to the USB device UD, and the USB hub 220 is communicatively connected to the USB interface 204 of the first communication port 202 of the image control device 20 through the USB interface 224 of the third communication port 222. In one embodiment, the USB device UD may be an input device provided for user operation, such as a mouse or a keyboard. The user may provide input signals to the image control device 20 by controlling the USB device UD, thereby operating the application executed by the image control device 20. After receiving the input signal for operating the application, the first processing module 101 of the image control device 20 generates the corresponding control signal, and provide it to the UART interface 113 of the second communication port 112 of the projector 11 through the TTYS interface 103 of the first communication port 202, the UART interface 223 of the third communication port 222 of the relay module 22, and the microcontroller 221, so that the projector 11 executes related functions. In other embodiments, the USB device UD may also receive control signals from the image control device 20. For example, the USB device UD may be a camera, and the image control device 20 outputs a control signal to the relay module 22 through the USB interface 204 of the first communication port 202, and transmits it to the USB device UD through the USB hub 220, so that the USB device UD executes an operation corresponding to the control signal (e.g., taking a photo). That is, the image control device 20 and the USB device UD may respectively perform bidirectional signal communication through the USB interface 204 of the first communication port 202 and the USB interface 224 of the third communication port 222.

Specifically, the relay module 22 added in the projection system 2 between the image control device 20 and the projector 11 may be, for example, a bridge device. In addition to being configured to couple the TTYS interface 103 in the first communication port 202 to the UART interface 113 of the projector 11, the relay module 11 may also be configured to connect the TTYS interface 103 in the first communication port 202 to the UART interface 113 of the projector 11. The USB interface 204 is coupled to the USB hub 220 for bidirectional transmission of input signals or control signals.

In addition, in this embodiment, the USB interface 204 and the TTYS interface 103 in the first communication port 202 of the image control device 20 are integrated in the same communication port 202 (e.g., a USB Type-C communication port), but in other embodiments, the USB interface 204 and the TTYS interface 103 may also exist in different communication ports to perform bidirectional transmission of control signals and input signals, and the disclosure is not limited thereto. Similarly, the same is true for the third communication port 222 of the relay module 22, which is not repeated herein.

In one embodiment, the microcontroller 221 may be implemented using the same or similar elements as the first processing module 101 and/or the second processing module 111, which is not repeated herein.

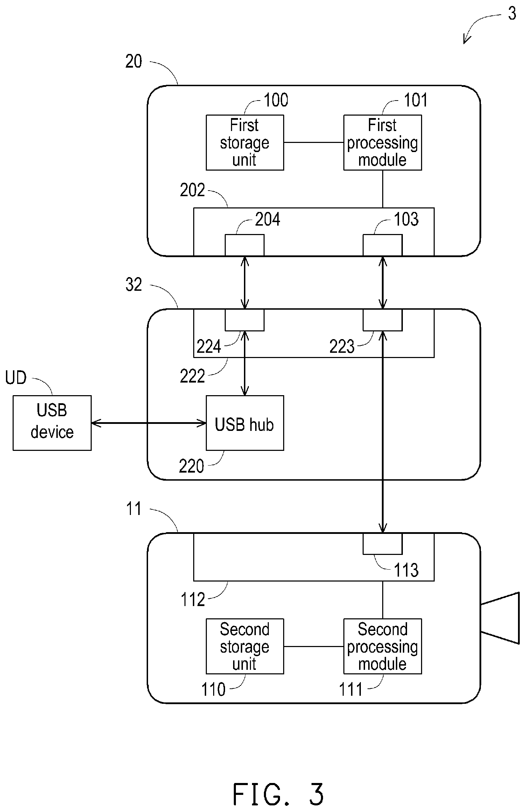

FIG. 3 is a block schematic diagram of a projection system 3 of another embodiment of the disclosure. The projection system 3 includes an image control device 20, a projector 11, and a relay module 32. The projection system 3 of FIG. 3 is similar to the projection system 2 of FIG. 2, so the same elements use the same symbols and are not repeated herein. Specifically, the relay module 22 in FIG. 2 is replaced by the relay module 32 in FIG. 3, so that the UART interface 223 of the third communication port 222 is directly communicatively connected to the UART interface 113 of the second communication port 112. In other words, in this embodiment, the UART interface 223 of the third communication port 222 provides the function of wiring connection or forwarding control signals between the TTYS interface 103 of the image control device 20 and the UART interface 113 of the projector 11, so that the control signal sent by the first processing module 101 of the image control device 20 may be provided from the TTYS interface 103 of the first communication port 102 to the UART interface 113 of the second communication port 112 through the communication connection of the third communication port 222 of the relay module 32.

In this embodiment, the relay module 32 also receives an input signal generated in response to the user operating the USB device UD, and the image control device 20 generates a corresponding control signal based on the input signal. The first processing module 101 of the image control device 20 may provide the control signal to the UART interface 223 of the third communication port 222 of the relay module 32 through the TTYS interface 103 of the first communication port 202, and further provide it to the UART interface 113 of the second communication port 112 of the projector 11.

In this embodiment, the UART interface 223 of the third communication port 222 of the relay module 32 is directly communicatively connected to the UART interface 113 of the second communication port 112 of the projector 11. Therefore, after the projector 11 receives the control signal, the ASCII-encoded control signal may be translated in the second processing module 111 of the projector 11, and then the projector 11 executes the corresponding operation.

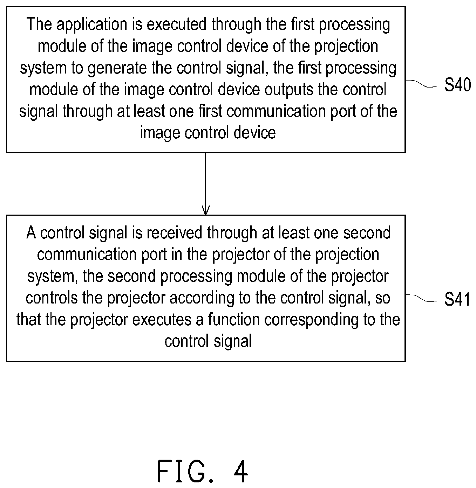

FIG. 4 is a flowchart of a control method of an embodiment of the disclosure. The control method of FIG. 4 may be executed by any one of the projection systems 1 to 3 in FIG. 1 to FIG. 3. The control method of FIG. 4 includes steps S40 and S41.

In step S40, the first processing module of the image control device of the projection system executes an application to generate a control signal. The first processing module of the image control device outputs the control signal through at least one first communication port of the image control device. Specifically, the application executed by the image control device may provide a variety of functions for controlling the projector (e.g., system settings). The user may select the control item to be performed by operating the application, so that the first processing module of the image control device generates a control signal corresponding to the selected control item and provides the control signal to the projector.

In step S41, a control signal is received through at least one second communication port in the projector of the projection system. The second processing module of the projector controls the projector according to the control signal, so that the projector executes a function corresponding to the control signal.

In one embodiment, the projection system establishes a control signal transmission channel through specific interfaces between the first communication port and the second communication port. For example, when the first communication port of the image control device is a USB Type-C communication port, the differential signal docking pins in the USB Type-C communication port may be used as a TTYS interface to establish a control signal transmission channel with the UART interface in the second communication port of the projector. In this way, in the projection system, the items for the image control device to control the projector may be expanded.

In some embodiments, the projection system further includes a relay module coupled between the image control device and the projector. The relay module includes a third communication port, which is communicatively connected to the first communication port of the image control device. The third communication port may provide the control signal transmitted by the first communication port to the second communication port of the projector through wiring.

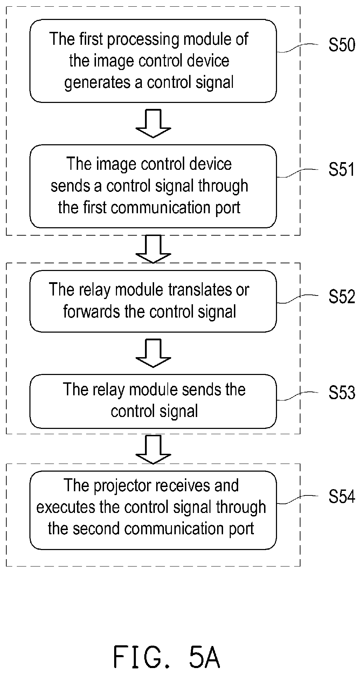

FIG. 5A is a flowchart of a control method of another embodiment of the disclosure. The control method of FIG. 5A may be executed by any one of the projection systems 1 to 3 in FIG. 1 to FIG. 3. The control method of FIG. 5A includes steps S50 to S54.

Steps S50 and S51 may be executed by the image control device. In step S50, the first processing module of the image control device may receive the input signal generated in response to the operation of the user by executing the application, thereby generating a corresponding control signal. In some embodiments, the first processing module of the image control device may, for example, generate a control signal in a first encoding form (e.g., decimal) according to the input signal input by the user, by searching a first lookup table. The first lookup table may be stored in the first storage unit 100 of the image control device as shown in FIG. 1 to FIG. 3. Next, in step S51, the image control device may use the differential signal docking pins in the first communication port as a TTYS interface to transmit the control signal.

Steps S52 and S53 may be executed by the relay module. In step S52, the relay module may receive the control signal and translate or forward it. In some embodiments, when the relay module translates the control signal, the microcontroller in the relay module may, for example, translate the control signal from a first encoding form (e.g., decimal) to a second encoding form (e.g., hexadecimal). In some embodiments, when the relay module forwards the control signal, in the relay module, the UART interface of the third communication port may be connected to the UART interface of the second communication port of the projector through wiring. Therefore, in step S53, the relay module may transmit the processed control signal to the projector.

Step S54 may be executed by the projector. In step S54, the projector may receive the control signal through the UART interface on the second communication port and execute a corresponding function (e.g., system settings).

In some embodiments, when the projection system does not include a relay module, the control method in FIG. 5A may omit steps S52 and S53. That is, in step S51, after the image control device sends the control signal, it is directly followed by step S54, where the projector receives the control signal. In one embodiment, when the projector receives the control signal directly from the image control device, or the control signal received by the projector is only forwarded through the relay module without being translated, the second processing module in the projector may translate the control signal into a second encoding form (e.g., hexadecimal) by searching the second lookup table stored in the projector and then execute the corresponding function. The second lookup table may be stored in the second storage unit 110 of the projector as shown in FIG. 1 to FIG. 3.

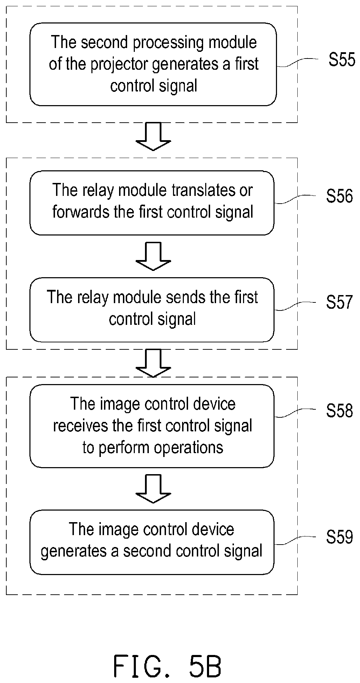

FIG. 5B is a flowchart of a control method of another embodiment of the disclosure. The control method of FIG. 5B may be executed by any one of the projection systems 1 to 3 in FIG. 1 to FIG. 3. The control method of FIG. 5B includes steps S55 to S59.

In the projection system, in addition to the transmission of control signals initiated by the image control device, the transmission of control signals may also be initiated by the projector to realize bidirectional communication between the image control device and the projector. Specifically, step S55 may be executed by the projector. In step S55, the projector may receive the first control signal (i.e., the input signal) generated in response to the operation of the user. For example, the user may select the function to be performed (e.g., autofocus) by operating the remote controller of the projector, the buttons on the projector, or the on-screen display (OSD) displayed by the projector. In this way, the second processing module of the projector may send the first control signal corresponding to the command of the user for auto-focusing through the second communication port.

Steps S56 and S57 may be executed by the relay module. In step S56, the relay module may receive the first control signal and translate or forward it. In one embodiment, when the relay module translates the first control signal, the microcontroller in the relay module may, for example, translate the first control signal from a second encoding form (e.g., hexadecimal) to a first encoding form (e.g., decimal). In one embodiment, when the relay module forwards the first control signal, in the relay module, the UART interface of the second communication port of the projector may be communicatively connected to the TTYS interface of the first communication port of the image control device through wiring. Therefore, in step S57, the relay module may transmit the processed first control signal to the image control device.

Steps S58 and S59 may be executed by the image control device. In step S58, the image control device may receive the first control signal through the TTYS interface of the first communication port. Since in this embodiment, the operation commanded by the user is to perform auto-focusing, the first processing module of the image control device may accordingly initiate the application corresponding to the auto-focus or execute the corresponding function in the application. In order to perform auto-focusing, the first processing module may turn on the camera in the image control device (not shown in FIG. 1 to FIG. 3) or use the USB device UD external to the relay module to capture the projected image formed by the beam projected by the projector, and calculate the focal length adjustment range of the projector accordingly. In this way, in step S59, the first processing module of the image control device may generate the corresponding second control signal according to the calculated focal length adjustment range. In one embodiment, the control method of FIG. 5B may then execute the control method of FIG. 5A, that is, steps S51 to S54 may be executed after step S59. Specifically, in this embodiment, the projection system is a system setting that accepts user control to perform operation such as automatic focal length adjustment. Therefore, after the image control device calculates the focal length adjustment amount, the corresponding second control signal may be provided to the projector through steps S51 to S54, so that the projector receives and executes the second control signal to adjust the focal length by a corresponding amount to complete the auto-focus operation specified by the user.

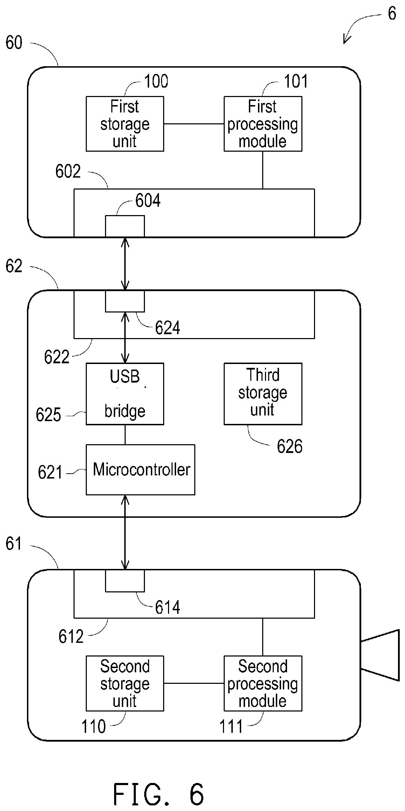

FIG. 6 is a block schematic diagram of a projection system 6 of another embodiment of the disclosure. The projection system 6 includes an image control device 60, a projector 61, and a relay module 62. The projection system 6 of FIG. 6 is similar to the projection system 1 of FIG. 1, so the same elements use the same symbols and are not repeated herein. In this embodiment, the interface 604 in the first communication port 602 of the image control device 60 is a USB interface, and the interface 614 in the second communication port 612 of the projector 61 may also be a USB interface. In addition, the relay module 62 is coupled between the image control device 60 and the projector 61. Specifically, the image control device 60 includes a first storage unit 100, the projector 61 includes a second storage unit 110, and the relay module 62 includes a third communication port 622, a USB bridge 625, a microcontroller 621, and a third storage unit 626. The relay module 62 is communicatively connected to the USB interface 604 of the first communication port 602 of the image control device 60 through the USB interface 624 of the third communication port 622. The USB bridge 625 is configured to receive control signals transmitted from the image control device 60 via the USB interface 604 of the first communication port 602 and the USB interface 624 of the third communication port 622, and transmits the control signal to the USB interface 614 of the second communication port 612 of the projector 61 in a forwarding manner. The control signal transmitted by the USB interface 604 of the communication port 602 and the USB interface 624 of the third communication port 622 is transmitted to the USB interface 614 of the second communication port 612 of the projector 61 in a forwarding manner. In addition, the microcontroller 621 is connected between the USB bridge 625 and the projector 61. The control signal is sequentially forwarded to the projector 61 through the USB interface 604 of the first communication port 602 of the image control device 60, the USB interface 624 of the third communication port 622 of the relay module 62, the USB bridge 625, the microcontroller 621, and the USB interface 614 of the second communication port 612 of the projector 61.

In terms of operation, the image control device 60 and the projector 61 may operate as master devices at the same time, and the relay module 62 is regarded as a medium to read and write commands to realize the transmission of control signals. For example, the first storage unit 100 of the image control device 60 is configured to store the first data, and the projector 61 may access the first data through the USB bridge 625. Alternatively, the second storage unit 110 in the projector 61 is configured to store the second data, and the image control device 60 may access the second data through the USB bridge 625. In one embodiment, the write command of the control signal (or the first data in the first storage unit 100) sent by the image control device 60 may carry the address information related to the third storage unit 626 in the relay module 62 to specify that the control signal is stored in the third storage unit 626 of the relay module 62. The relay module 62 may receive the write command through the USB interface 624 in the third communication port 622 and store the control signal in the storage unit 626. On the other hand, the second processing module 111 of the projector 61 may issue a read command, which may also carry address information related to the third storage unit 626 in the relay module 62 to read the control signal stored in the relay module 62. The relay module 62 may provide the control signal to the USB interface 614 of the second communication port 612 of the projector 61, so that the projector 61 receives the control signal (or the first data in the first storage unit 100) and performs the corresponding function according to the control signal. The reverse method of sending the control signal (or the second data in the second storage unit 110) from the projector 61 is also similar and is not repeated herein.

In addition, in this embodiment, although the second communication port 612 of the projector 61 only has one USB interface, in other embodiments, the second communication port may also be provided with both a USB interface and a UART interface (e.g., combined with the embodiment of FIG. 1). The USB interface and UART interface of the second communication port may be integrated into the same communication port (e.g., the USB Type-C communication port) like the first communication port and the third communication port mentioned above, or may exist individually in different communication ports, and are not limited thereto.

In one embodiment, the third storage unit 626 may be implemented using the same or similar elements as the first storage unit 100 and/or the second storage unit 110, which is not repeated herein.

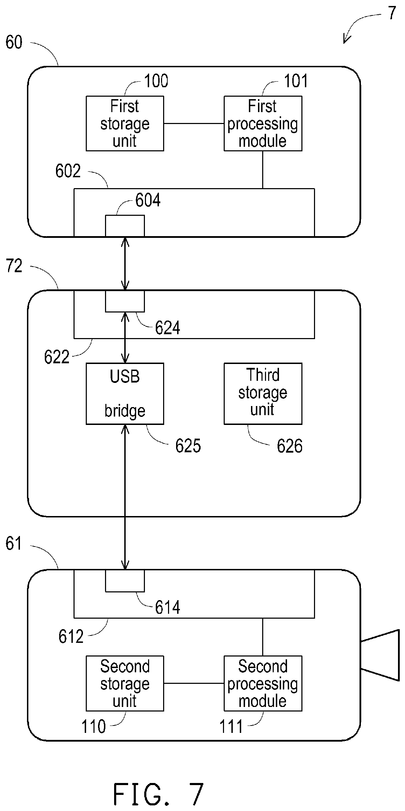

FIG. 7 is a block schematic diagram of a projection system 7 of another embodiment of the disclosure. The projection system 7 of FIG. 7 is similar to the projection system 6 of FIG. 6, so the same elements use the same symbols and are not repeated herein. The difference between the projection system 6 of FIG. 6 and the projection system 7 of FIG. 7 is that in the projection system 7 of FIG. 7, there is no microcontroller provided on the path between the third communication port 622 of the relay module 72 and the second communication port 612 of the projector 61 for transmitting control signals. Specifically, when a microcontroller is provided on the path for transmitting control signals between the third communication port 622 and the second communication port 612 (as in the embodiment of FIG. 6), the relay module may pre-process the control signal provided by the image control device 60 to reduce the calculation load of the second processing module 111 of the proj ector 61. However, in this embodiment, the microcontroller may also be omitted from the path for transmitting control signals between the third communication port 622 and the second communication port 612. In this way, the relay module 72 only performs writing, accessing, and forwarding of the control signal, and does not perform signal pre-processing. Correspondingly, the second processing module 111 in the projector 61 may perform necessary signal pre-processing operations after receiving the control signal.

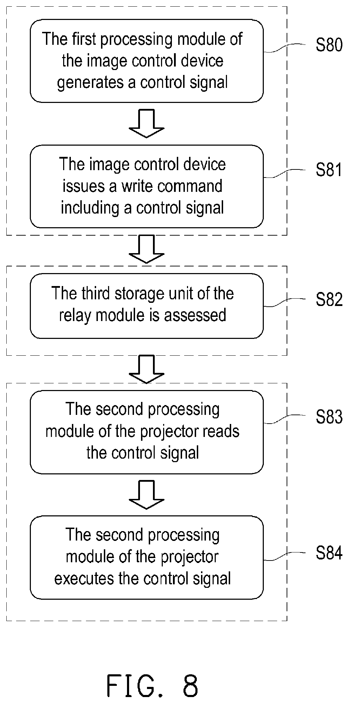

FIG. 8 is a flowchart of a control method of another embodiment of the disclosure. The control method of FIG. 8 may be executed by any one of the projection systems 6 and 7 in FIG. 6 and FIG. 7. The control method of FIG. 8 includes steps S80 to S84.

Steps S80 and S81 may be executed by the image control device. In step S80, the first processing module of the image control device may receive the input signal generated in response to the operation of the user by executing the application, thereby generating a corresponding control signal. Next, in step S81, the image control device may issue a write command including the control signal through the USB interface in the first communication port to transmit the control signal to the relay module.

Step S82 may be executed by the relay module. In step S82, the relay module may receive the write command through the third communication port, and write the control signal into the third storage unit in the relay module according to the address information carried in the write command.

Steps S83 and S84 may be executed by the projector. In step S83, the second processing module of the projector may issue a read command to the relay module through the USB interface of the second communication port to read the control signal stored in the third storage unit of the relay module. In some embodiments, the relay module may pre-process or forward the control signal to transmit the control signal to the projector. Finally, in step S84, the second processing module of the projector may execute the corresponding function according to the read control signal.

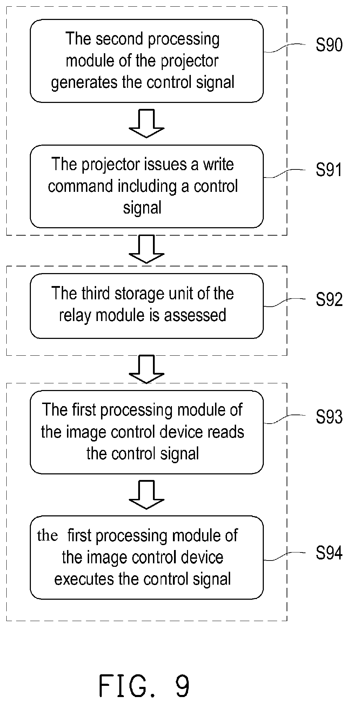

FIG. 9 is a flowchart of a control method of another embodiment of the disclosure. The control method of FIG. 9 may be executed by any one of the projection systems 6 and 7 in FIG. 6 and FIG. 7. The control method of FIG. 9 includes steps S90 to S94.

Steps S90 and S91 may be executed by the projector. In step S90, the second processing module of the projector may receive the input signal generated in response to the operation of the user, thereby generating a corresponding control signal. Next, in step S91, the projector may issue a write command including the control signal through the USB interface in the second communication port to transmit the control signal to the relay module.

Step S92 may be executed by the relay module. In step S92, the relay module may receive the write command and write the control signal into the third storage unit in the relay module according to the address information carried in the write command.

Steps S93 and S94 may be executed by the image control device. In step S93, the first processing module of the image control device may issue a read command to the relay module through the USB interface in the first communication port to read the control signal stored in the third storage unit of the relay module. Finally, in step S94, the first processing module of the image control device may execute the corresponding function according to the read control signal.

For example, the control method in FIG. 9 may also be applied to the aforementioned paragraphs, where the user controls the auto-focus by operating the projector. Specifically, after the user operates the projector and issues a command for auto-focus, the projection system may command the image control device from the projector to initiate the application corresponding to the auto-focus or to execute the corresponding function in the application by executing steps S90 to S94. Therefore, after executing the relevant operations and calculating the focal length adjustment amount of the projector, the image control device may continue to execute the control method of FIG. 8 to provide the control signal including the focal length adjustment amount to the projector through steps S80 to S84, so that the projector receives and executes the control signal to adjust the focal length by a corresponding amount to complete the auto-focus operation specified by the user.

In summary, the projection system and control method of the disclosure may transmit control signals through at least one of the TTYS interface or USB interface in the image control device, thereby realizing the function of controlling the projector (e.g., system settings) in a relatively simple way.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto. Therefore, the term "the disclosure", "the present disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the present disclosure as defined by the following claims.

## Claims

1. A projection system, comprising:
an image control device (20), comprising a first processing module (101), an application, and at least one first communication port (202), wherein the first processing module (101) is configured to execute the application and generate a control signal through the application, the first processing module (101) is configured to output the control signal through the at least one first communication port (202); and
a projector (11), comprising a second processing module (111) and at least one second communication port (112), wherein the projector (11) is communicatively connected to the at least one first communication port (202) of the image control device (20) through the at least one second communication port (112), the second processing module (112) is configured to receive the control signal through the at least one second communication port (112) and to control the projector (11) according to the control signal, so that the projector (11) is configured to execute a function corresponding to the control signal,
**characterized in that**
the at least one first communication port (202) comprises a teletype serial , TTYS, interface (103) and a universal serial bus , USB, interface (204), and the control signal is output through the teletype serial , TTYS, interface (103) and is an American standard code for information interchange, ASCII, encoded signal.

2. The projection system according to claim 1, wherein the at least one first communication port (202) is a universal serial bus Type-C interface (USB Type-C) communication port or a serial advanced technology attachment (SATA) communication port.

3. The projection system according to claim 2, wherein when the at least one first communication port (202) is a USB Type-C communication port, the TTYS interface (103) of the at least one first communication port (202) is located at differential signal docking pins in the USB Type-C communication port, the USB interface (204) of the at least one first communication port (202) is located at USB 2.0 interface pins in the USB Type-C communication port.

4. The projection system according to any one of the preceding claims, wherein the at least one second communication port (112) comprises at least one of a universal asynchronous receiver/transmitter , UART, interface and a universal serial bus (USB) interface, when the control signal is output from the image control device (20) through the TTYS interface (103) of the at least one first communication port (202), the projector (11) receives the control signal through the UART interface (113) of the at least one second communication port (112), when the control signal is output from the image control device (20) through the USB interface (204) of the at least one first communication port (202), the projector (11) receives the control signal through the USB interface of the at least one second communication port (112).

5. The projection system according to claim 4, further comprising a relay module (22), the relay module (22) comprising at least one third communication port (222), wherein the relay module (22) is communicatively connected to the at least one first communication port (202) of the image control device (20) through a UART interface (223) of the at least one third communication port (222), the first processing module (101) of the image control device (20) is configured to transmit the control signal to the relay module (22) through the TTYS interface (103) of the at least one first communication port (202) and the UART interface (223) of the at least one third communication port (222), wherein the relay module (22) further comprises a microcontroller (221) configured to translate the control signal, the control signal transmitted to the projector (11) through the UART interface (113) of the at least one second communication port (112) after the control signal is translated by the microcontroller (221).

6. The projection system according to claim 5, wherein the relay module (22) further comprises a USB hub (220) configured to connect at least one USB device (UD), the USB hub (220) is communicatively connected to the at least one first communication port (202) of the image control device (20) through a USB interface (224) of the at least one third communication port (222), the image control device (20) outputs the control signal to the relay module (22) through the USB interface (204) of the at least one first communication port (202), and transmits the control signal to the USB device (UD) through the USB hub (220), so that the at least one USB device (UD) executes an operation corresponding to the control signal.

7. A control method, configured to control a projection system, the control method comprising:
generating (S50) a control signal by executing an application through a first processing module (101) of an image control device (20) of the projection system, wherein the first processing module (101) of the image control device (20) outputs (S51) the control signal through at least one first communication port (202) of the image control device (20); and
receiving (S54) the control signal through at least one second communication port (112) in a projector (11) of the projection system, wherein a second processing module (111) of the projector (11) controls the projector (11) according to the control signal, so that the projector (11) executes a function corresponding to the control signal,
**characterized in that**
the at least one first communication port (202) comprises a teletype serial , TTYS, interface and a universal serial bus , USB, interface, and the control signal is output through the teletype serial , TTYS, interface (103) and is an American standard code for information interchange, ASCII, encoded signal.

8. The control method according to claim 7, wherein the at least one first communication port (202) is a universal serial bus type C interface (USB Type-C) communication port or a serial advanced technology attachment (SATA) communication port, preferably when the at least one first communication port (202) is a USB Type-C communication port, the TTYS interface of the at least one first communication port is located at differential signal docking pins in the USB Type-C communication port, the USB interface of the at least one first communication port (202) is located at USB 2.0 interface pins in the USB Type-C communication port.

9. The control method according to claim 7 or 8, wherein the at least one second communication port (112) comprises at least one of a universal asynchronous receiver/transmitter , UART, interface (113) and a universal serial bus (USB) interface, when the control signal is output from the image control device (20) through the TTYS interface (103) of the at least one first communication port (202), the projector (11) receives the control signal through the UART interface (113) of the at least one second communication port (112), when the control signal is output from the image control device (20) through the USB interface (204) of the at least one first communication port (202), the projector (11) receives the control signal through the USB interface of the at least one second communication port.

10. The control method according to claim 9, wherein the projector system further comprises a relay module (22), the relay module comprises at least one third communication port (222), the control signal is transmitted to the relay module (22) by the first processing module (101) of the image control device (20) through the TTYS interface (103) of the at least one first communication port (202) and a UART interface (223) of the at least one third communication port (222), a microcontroller (221) of the relay module (22) translates the control signal, and transmits the control signal to the projector (11) through the UART interface (113) of the at least one second communication port (112), preferably the relay module (22) further comprises a USB hub (202) configured to connect at least one USB device (UD), the control method further comprises outputting the control signal through the USB interface (204) of the at least one first communication port (202) and transmitting the control signal to the at least one USB device (UD) in the relay module (22) through a USB interface (224) of the at least one third communication port (222) and the USB hub (220), so that the at least one USB device (UD) executes an operation corresponding to the control signal.

## Patentansprüche

1. Projektionssystem, das Folgendes umfasst:
eine Bildsteuervorrichtung (20), die ein erstes Verarbeitungsmodul (101), eine Anwendung und mindestens einen ersten Kommunikationsanschluss (202) umfasst, wobei das erste Verarbeitungsmodul (101) konfiguriert ist, die Anwendung auszuführen und durch die Anwendung ein Steuersignal zu erzeugen, wobei das erste Verarbeitungsmodul (101) konfiguriert ist, das Steuersignal durch den mindestens einen Kommunikationsanschluss (202) auszugeben; und
einen Projektor (11), der ein zweites Verarbeitungsmodul (111) und mindestens einen zweiten Kommunikationsanschluss (112) umfasst, wobei der Projektor (11) durch den mindestens einen zweiten Kommunikationsanschluss (112) mit dem mindestens einen ersten Kommunikationsanschluss (202) der Bildsteuervorrichtung (20) kommunikationstechnisch verbunden ist, wobei das zweite Verarbeitungsmodul (112) konfiguriert ist, das Steuersignal durch den mindestens einen zweiten Kommunikationsanschluss (112) zu empfangen und den Projektor (11) gemäß dem Steuersignal zu steuern, derart, dass der Projektor (11) konfiguriert ist, eine Funktion auszuführen, die dem Steuersignal entspricht,
**dadurch gekennzeichnet, dass**
der mindestens eine erste Kommunikationsanschluss (202) eine serielle Teletype-Schnittstelle (103), TTYS-Schnittstelle, und eine Schnittstelle (204) des universellen seriellen Busses, USB-Schnittstelle, umfasst und das Steuersignal durch die serielle Teletype-Schnittstelle (103), TTYS-Schnittstelle, ausgegeben wird und ein mit dem "American Standard Code for Information Exchange", ASCII-Code, codiertes Signal ist.

2. Projektionssystem nach Anspruch 1, wobei der mindestens eine erste Kommunikationsanschluss (202) ein Kommunikationsanschluss mit einer Schnittstelle des universellen seriellen Busses des Typs C, USB-C-Schnittstelle, oder ein "Serial Advanced Technology Attachment"-Kommunikationsanschluss, SATA-Kommunikationsanschluss, ist.

3. Projektionssystem nach Anspruch 2, wobei dann, wenn der mindestens eine erste Kommunikationsanschluss (202) ein USB-C-Kommunikationsanschluss ist, die TTYS-Schnittstelle (103) des mindestens einen ersten Kommunikationsanschlusses (202) an Differentialsignal-Anschlussstiften im USB-C-Kommunikationsanschluss angeordnet ist, die USB-Schnittstelle (204) des mindestens einen ersten Kommunikationsanschlusses (202) an USB-2.0-Schnittstellenstiften im USB-C-Kommunikationsanschluss angeordnet ist.

4. Projektionssystem nach einem der vorhergehenden Ansprüche, wobei der mindestens eine zweite Kommunikationsanschluss (112) eine universelle asynchrone Empfänger/Sender-Schnittstelle, UART-Schnittstelle, und/oder eine Schnittstelle des universellen seriellen Busses, USB-Schnittstelle, umfasst, wobei dann, wenn das Steuersignal von der Bildsteuervorrichtung (20) durch die TTYS-Schnittstelle (103) des mindestens einen ersten Kommunikationsanschlusses (202) ausgegeben wird, der Projektor (11) das Steuersignal durch die UART-Schnittstelle (113) des mindestens einen zweiten Kommunikationsanschlusses (112) empfängt, wobei dann, wenn das Steuersignal von der Bildsteuervorrichtung (20) durch die USB-Schnittstelle (204) des mindestens einen ersten Kommunikationsanschlusses (202) ausgegeben wird, der Projektor (11) das Steuersignal durch die USB-Schnittstelle des mindestens einen zweiten Kommunikationsanschlusses (112) empfängt.

5. Projektionssystem nach Anspruch 4, das ferner ein Relais-Modul (22) umfasst, wobei das Relais-Modul (22) mindestens einen dritten Kommunikationsanschluss (222) umfasst, wobei das Relais-Modul (22) durch eine UART-Schnittstelle (223) des mindestens einen dritten Kommunikationsanschlusses (222) mit dem mindestens einen ersten Kommunikationsanschluss (202) der Bildsteuervorrichtung (20) kommunikationstechnisch verbunden ist, das erste Verarbeitungsmodul (101) der Bildsteuervorrichtung (20) konfiguriert ist, das Steuersignal durch die TTYS-Schnittstelle (103) des mindestens einen ersten Kommunikationsanschlusses (202) und die UART-Schnittstelle (223) des mindestens einen dritten Kommunikationsanschlusses (222) an das Relais-Modul (22) zu übertragen, wobei das Relais-Modul (22) ferner einen Mikrocontroller (221) umfasst, der konfiguriert ist, das Steuersignal zu übersetzen, wobei das Steuersignal durch die UART-Schnittstelle (113) des mindestens einen zweiten Kommunikationsanschlusses (112) an den Projektor (11) übertragen wird, nachdem das Steuersignal durch den Mikrocontroller (221) übersetzt worden ist.

6. Projektionssystem nach Anspruch 5, wobei das Relais-Modul (22) ferner einen USB-Hub (220) umfasst, der konfiguriert ist, mindestens eine USB-Vorrichtung (UD) zu verbinden, der USB-Hub (220) durch eine USB-Schnittstelle (224) des mindestens einen dritten Kommunikationsanschlusses (222) mit dem mindestens einen ersten Kommunikationsanschluss (202) der Bildsteuervorrichtung (20) kommunikationstechnisch verbunden ist, die Bildsteuervorrichtung (20) das Steuersignal durch die USB-Schnittstelle (204) des mindestens einen ersten Kommunikationsanschlusses (202) an das Relais-Modul (22) ausgibt und das Steuersignal durch den USB-Hub (220) an die USB-Vorrichtung (UD) überträgt, derart, dass die mindestens eine USB-Vorrichtung (UD) einen Vorgang ausführt, der dem Steuersignal entspricht.

7. Steuerverfahren, das konfiguriert ist, ein Projektionssystem zu steuern, wobei das Steuerverfahren Folgendes umfasst:
Erzeugen (S50) eines Steuersignals durch Ausführen einer Anwendung durch ein erstes Verarbeitungsmodul (101) einer Bildsteuervorrichtung (20) des Projektionssystems, wobei das erste Verarbeitungsmodul (101) der Bildsteuervorrichtung (20) das Steuersignal durch mindestens einen ersten Kommunikationsanschluss (202) der Bildsteuervorrichtung (20) ausgibt (S51); und
Empfangen (S54) des Steuersignals durch mindestens einen zweiten Kommunikationsanschluss (112) in einem Projektor (11) des Projektionssystems, wobei ein zweites Verarbeitungsmodul (111) des Projektors (11) den Projektor (11) gemäß dem Steuersignal steuert, derart, dass der Projektor (11) eine Funktion ausführt, die dem Steuersignal entspricht,
**dadurch gekennzeichnet, dass**
der mindestens eine erste Kommunikationsanschluss (202) eine serielle Teletype-Schnittstelle (103), TTYS-Schnittstelle, und eine Schnittstelle (204) des universellen seriellen Busses, USB-Schnittstelle, umfasst und das Steuersignal durch die serielle Teletype-Schnittstelle (103), TTYS-Schnittstelle, ausgegeben wird und ein mit dem "American Standard Code for Information Exchange", ASCII-Code, codiertes Signal ist.

8. Steuerverfahren nach Anspruch 7, wobei der mindestens eine erste Kommunikationsanschluss (202) ein Kommunikationsanschluss mit einer Schnittstelle des universellen seriellen Busses des Typs C, USB-C-Schnittstelle, oder ein "Serial Advanced Technology Attachment"-Kommunikationsanschluss, SATA-Kommunikationsanschluss, ist, vorzugsweise wobei dann, wenn der mindestens eine erste Kommunikationsanschluss (202) ein USB-C-Kommunikationsanschluss ist, die TTYS-Schnittstelle des mindestens einen ersten Kommunikationsanschlusses an Differentialsignal-Anschlussstiften im USB-C-Kommunikationsanschluss angeordnet ist, die USB-Schnittstelle des mindestens einen ersten Kommunikationsanschlusses (202) an USB-2.0-Schnittstellenstiften im USB-C-Kommunikationsanschluss angeordnet ist.

9. Steuerverfahren nach Anspruch 7 oder 8, wobei der mindestens eine zweite Kommunikationsanschluss (112) eine universelle asynchrone Empfänger/Sender-Schnittstelle (113), UART-Schnittstelle und/oder eine Schnittstelle des universellen seriellen Busses, USB-Schnittstelle, umfasst, wobei dann, wenn das Steuersignal von der Bildsteuervorrichtung (20) durch die TTYS-Schnittstelle (103) des mindestens einen ersten Kommunikationsanschlusses (202) ausgegeben wird, der Projektor (11) das Steuersignal durch die UART-Schnittstelle (113) des mindestens einen zweiten Kommunikationsanschlusses (112) empfängt, wobei dann, wenn das Steuersignal von der Bildsteuervorrichtung (20) durch die USB-Schnittstelle (204) des mindestens einen ersten Kommunikationsanschlusses (202) ausgegeben wird, der Projektor (11) das Steuersignal durch die USB-Schnittstelle des mindestens einen zweiten Kommunikationsanschlusses empfängt.

10. Steuerverfahren nach Anspruch 9, wobei das Projektorsystem ferner ein Relais-Modul (22) umfasst, das Relais-Modul mindestens einen dritten Kommunikationsanschluss (222) umfasst, das Steuersignal durch das erste Verarbeitungsmodul (101) der Bildsteuervorrichtung (20) durch die TTYS-Schnittstelle (103) des mindestens einen ersten Kommunikationsanschlusses (202) und eine UART-Schnittstelle (223) des mindestens einen dritten Kommunikationsanschlusses (222) an das Relais-Modul (22) übertragen wird, ein Mikrocontroller (221) des Relais-Moduls (22) das Steuersignal übersetzt und das Steuersignal durch die UART-Schnittstelle (113) des mindestens einen zweiten Kommunikationsanschlusses (112) an den Projektor (11) überträgt, vorzugsweise wobei das Relais-Modul (22) ferner einen USB-Hub (202) umfasst, der konfiguriert ist, mindestens eine USB-Vorrichtung (UD) zu verbinden, wobei das Steuerverfahren ferner das Ausgeben des Steuersignals durch die USB-Schnittstelle (204) des mindestens einen ersten Kommunikationsanschlusses (202) und das Übertragen des Steuersignals durch eine USB-Schnittstelle (224) des mindestens einen dritten Kommunikationsanschlusses (222) und den USB-Hub (220) an die mindestens eine USB-Vorrichtung (UD) im Relais-Modul (22) umfasst, derart, dass die mindestens eine USB-Vorrichtung (UD) einen Vorgang ausführt, der dem Steuersignal entspricht.

## Revendications

1. Système de projection, comportant :
un dispositif de commande d'image (20), comportant un premier module de traitement (101), une application et au moins un premier port de communication (202), dans lequel le premier module de traitement (101) est configuré pour exécuter l'application et générer un signal de commande via l'application, le premier module de traitement (101) est configuré pour émettre le signal de commande via le au moins un premier port de communication (202) ; et
un projecteur (11), comportant un second module de traitement (111) et au moins un deuxième port de communication (112), dans lequel le projecteur (11) est connecté au au moins un premier port de communication (202) du dispositif de commande d'image (20) de façon à pouvoir communiquer via le au moins un deuxième port de communication (112), le second module de traitement (112) est configuré pour recevoir le signal de commande via le au moins un deuxième port de communication (112) et pour commander le projecteur (11) en fonction du signal de commande, de sorte que le projecteur (11) est configuré pour exécuter une fonction correspondant au signal de commande,
**caractérisé en ce que**
le au moins un premier port de communication (202) comporte une interface TTYS (TeleTYpe Serial) (103) et une interface USB (Universal Serial Bus) (204), et le signal de commande est émis via l'interface TTYS (TeleTYpe Serial) (103) et est un signal codé en ASCII (American Standard Code for Information Interchange).

2. Système de projection selon la revendication 1, dans lequel le au moins un premier port de communication (202) est un port de communication d'interface USB (Universal Serial Bus) de type C ou un port de communication SATA (Serial Advanced Technology Attachment).

3. Système de projection selon la revendication 2, dans lequel, lorsque le au moins un premier port de communication (202) est un port de communication USB de type C, l'interface TTYS (103) du au moins un premier port de communication (202) est située sur des broches de réception de signaux différentiels dans le port de communication USB de type C, l'interface USB (204) du au moins un premier port de communication (202) est située sur des broches d'interface USB 2.0 dans le port de communication USB de type C.

4. Système de projection selon l'une quelconque des revendications précédentes, dans lequel le au moins un deuxième port de communication (112) comporte au moins un élément parmi une interface UART (Universal Asynchronous Receiver/Transmitter) et une interface USB (Universal Serial Bus), lorsque le signal de commande est émis à partir du dispositif de commande d'image (20) via l'interface TTYS (103) du au moins un premier port de communication (202), le projecteur (11) reçoit le signal de commande via l'interface UART (113) du au moins un deuxième port de communication (112), lorsque le signal de commande est émis à partir du dispositif de commande d'image (20) via l'interface USB (204) du au moins un premier port de communication (202), le projecteur (11) reçoit le signal de commande via l'interface USB du au moins un deuxième port de communication (112).

5. Système de projection selon la revendication 4, comportant en outre un module de relais (22), le module de relais (22) comportant au moins un troisième port de communication (222), dans lequel le module de relais (22) est connecté au au moins un premier port de communication (202) du dispositif de commande d'image (20) de façon à pouvoir communiquer via une interface UART (223) du au moins un troisième port de communication (222), le premier module de traitement (101) du dispositif de commande d'image (20) est configuré pour transmettre le signal de commande au module de relais (22) via l'interface TTYS (103) du au moins un premier port de communication (202) et l'interface UART (223) du au moins un troisième port de communication (222), dans lequel le module de relais (22) comporte en outre un microcontrôleur (221) configuré pour traduire le signal de commande, le signal de commande étant transmis au projecteur (11) via l'interface UART (113) du au moins un deuxième port de communication (112) après traduction du signal de commande par le microcontrôleur (221).

6. Système de projection selon la revendication 5, dans lequel le module de relais (22) comporte en outre un concentrateur USB (220) configuré pour connecter au moins un dispositif USB (UD), le concentrateur USB (220) est connecté au au moins un premier port de communication (202) du dispositif de commande d'image (20) de façon à pouvoir communiquer via une interface USB (224) du au moins un troisième port de communication (222), le dispositif de commande d'image (20) émet le signal de commande vers le module de relais (22) via l'interface USB (204) du au moins un premier port de communication (202), et transmet le signal de commande au dispositif USB (UD) via le concentrateur USB (220), de sorte que le au moins un dispositif USB (UD) exécute une opération correspondant au signal de commande.

7. Procédé de commande, configuré pour commander un système de projection, le procédé de commande comportant les étapes consistant à :
générer (S50) un signal de commande en exécutant une application via un premier module de traitement (101) d'un dispositif de commande d'image (20) du système de projection, dans lequel le premier module de traitement (101) du dispositif de commande d'image (20) émet (S51) le signal de commande via au moins un premier port de communication (202) du dispositif de commande d'image (20) ; et
recevoir (S54) le signal de commande via au moins un deuxième port de communication (112) dans un projecteur (11) du système de projection, dans lequel un second module de traitement (111) du projecteur (11) commande le projecteur (11) en fonction du signal de commande, de sorte que le projecteur (11) exécute une fonction correspondant au signal de commande,
**caractérisé en ce que**
le au moins un premier port de communication (202) comporte une interface TTYS (TeleTYpe Serial) et une interface bus série universel, USB, et le signal de commande est émis via l'interface TTYS (TeleTYpe Serial) (103) et est un signal codé en ASCII (American Standard Code for Information Interchange).

8. Procédé de commande selon la revendication 7, dans lequel le au moins un premier port de communication (202) est un port de communication d'interface USB de type C (Universal Serial Bus) ou un port de communication SATA (Serial Advanced Technology Attachment), de préférence lorsque le au moins un premier port de communication (202) est un port de communication USB de type C, l'interface TTYS du au moins un premier port de communication est située sur des broches de réception de signaux différentiels dans le port de communication USB de type C, l'interface USB du au moins un premier port de communication (202) est située sur des broches d'interface USB 2.0 dans le port de communication USB de type C.

9. Procédé de commande selon la revendication 7 ou 8, dans lequel le au moins un deuxième port de communication (112) comporte au moins un élément parmi une interface UART (Universal Asynchronous Receiver/Transmitter) (113) et une interface USB (Universal Serial Bus), lorsque le signal de commande est émis à partir du dispositif de commande d'image (20) via l'interface TTYS (103) du au moins un premier port de communication (202), le projecteur (11) reçoit le signal de commande via l'interface UART (113) du deuxième port de communication (112), lorsque le signal de commande est émis à partir du dispositif de commande d'image (20) via l'interface USB (204) du au moins un premier port de communication (202), le projecteur (11) reçoit le signal de commande via l'interface USB du au moins un deuxième port de communication.

10. Procédé de commande selon la revendication 9, dans lequel le système de projecteur comporte en outre un module de relais (22), le module de relais comporte au moins un troisième port de communication (222), le signal de commande est transmis au module de relais (22) par le premier module de traitement (101) du dispositif de commande d'image (20) via l'interface TTYS (103) du au moins un premier port de communication (202) et une interface UART (223) du au moins un troisième port de communication (222), un microcontrôleur (221) du module de relais (22) traduit le signal de commande et transmet le signal de commande au projecteur (11) via l'interface UART (113) du au moins un deuxième port de communication (112), de préférence le module de relais (22) comporte en outre un concentrateur USB (202) configuré pour connecter au moins un dispositif USB (UD), le procédé de commande comporte en outre d'émettre le signal de commande via l'interface USB (204) du au moins un premier port de communication (202) et de transmettre le signal de commande au au moins un dispositif USB (UD) dans le module de relais (22) via une interface USB (224) du au moins un troisième port de communication (222) et du concentrateur USB (220), de sorte que le au moins un dispositif USB (UD) exécute une opération correspondant au signal de commande.
